(19) Europäisches Patentamt

European Patent Office

Office européen des brevets

(11) **EP 1 414 653 B1**

(12) **FASCICULE DE BREVET EUROPEEN**

(45) Date de publication et mention
de la délivrance du brevet:
**12.07.2006 Bulletin 2006/28**

(51) Int Cl.:
*B60C 11/12* *(2006.01)*   *B60C 11/04* *(2006.01)*
*B60C 11/13* *(2006.01)*

(21) Numéro de dépôt: 02754748.8

(22) Date de dépôt: **25.06.2002**

(86) Numéro de dépôt international:
**PCT/EP2002/007003**

(87) Numéro de publication internationale:
**WO 2003/006266 (23.01.2003 Gazette 2003/04)**

(54) **BANDE DE ROULEMENT POURVUE D'INCISIONS**

MIT SCHLITZEN VERSEHENE LAUFFLÄCHE

SLOTTED RUNNING TREAD PROVIDED

(84) Etats contractants désignés:
**AT BE CH CY DE DK ES FI FR GB GR IE IT LI LU
MC NL PT SE TR**

(30) Priorité:  **09.07.2001  FR 0109111**

(43) Date de publication de la demande:
**06.05.2004  Bulletin 2004/19**

(73) Titulaires:
• **Société de Technologie Michelin
63000 Clermont-Ferrand (FR)**
• **MICHELIN RECHERCHE ET TECHNIQUE S.A.
CH-1763 Granges-Paccot (CH)**

(72) Inventeur: **METZGER, Julien
F-63000 Clermont-Ferrand (FR)**

(74) Mandataire: **Diernaz, Christian
Michelin & Cie
Service SGD/LG/PI-LAD
63040 Clermont-Ferrand Cedex 09 (FR)**

(56) Documents cités:
**FR-A- 1 427 887     FR-A- 2 123 329
GB-A- 869 980**

**Description**

L'invention concerne les bandes de roulement de pneumatiques destinés à équiper des essieux moteur de véhicules et plus particulièrement de véhicule de type poids lourd.

Une telle bande de roulement est généralement pourvue d'une sculpture formée d'éléments de relief, nervures et/ou blocs, séparés les uns des autres dans le sens transversal et/ou circonférentiel par des rainures circonférentielles et/ou transversales. En fonction de l'essieu sur lequel est monté un pneumatique, sa bande de roulement est pourvue d'une sculpture comportant davantage de blocs ou davantage de nervures d'orientation générale circonférentielle. Dans le cas d'un essieu moteur, c'est-à-dire un essieu auquel est transmis un couple moteur ou freineur, il est d'usage de réaliser plutôt des sculptures comportant à la fois par des rainures circonférentielles et transversales délimitant une pluralité de blocs. Les inconvénients majeurs de ce type de sculpture sont un assouplissement de la bande de roulement (diminution de la rigidité de cisaillement sous un effort tangent à la surface des éléments de relief au passage dans le contact) et une émission de bruit en roulage augmentant avec le taux d'entaillement (rapport des surfaces de rainures sur la surface totale de la bande de roulement).

Une autre possibilité consiste à réaliser une sculpture formée de nervures d'orientation générale circonférentielle (c'est-à-dire pouvant être en zigzag autour de cette direction) et à pourvoir ces nervures avec une pluralité d'incisions de faible largeur comparée à la largeur des rainures (en règle générale, la largeur moyenne des incisions est au maximum 2 mm); ces incisions peuvent être obliques ou non par rapport à la direction transversale sur le pneumatique et s'étendre sur une partie ou la totalité de l'épaisseur utile de la bande de roulement (par définition, l'épaisseur utile correspond à l'épaisseur de bande de roulement que l'usager peut user tout en demeurant dans les prescriptions légales en vigueur). Si la présence de ces incisions est favorable en adhérence par la présence des nombreuses arêtes qu'elles forment sur la surface de roulement des nervures, l'augmentation de leur nombre conduit également à une diminution de rigidité qui est préjudiciable sur les autres performances du pneumatique, cette diminution de rigidité étant en partie lié à la possibilité qu'ont les parois de gomme en vis-à-vis délimitant chaque incision de glisser les unes par rapport aux autres lors du passage dans le contact avec la chaussée.

Une solution a été proposée notamment par la demanderesse dans son brevet EP 768958 qui décrit de nouvelles formes d'incisions réduisant sensiblement le glissement relatif entre parois en vis-à-vis et selon lesquelles lesdites parois présentent chacune une surface en relief formée de saillies et de cavités disposées de part et d'autre d'une surface moyenne, une saillie étant complètement entourée de cavités et réciproquement, de manière à ce que les surfaces de parois coopèrent ensemble pour limiter les mouvements relatifs entre lesdites parois.

Notons encore le document FR-A-1427887, décrivant une bande de roulement selon le préambule de la revendication 1. En général, ces incisions sont disposées de manière à former des arêtes de gomme qui sont essentiellement orientées transversalement pour avoir un effet sur l'adhérence du pneumatique sous couple moteur ou freineur en roulage ligne droite. On a constaté que sous des efforts tangents à la surface de contact des nervures pourvues de ce type d'incision, il se produisait certes un blocage d'une paroi sur la paroi en vis-à-vis mais que ce blocage n'est pas efficace instantanément. Au cours d'essais de mesure de bruit sur véhicule poids lourd consistant à appliquer un couple moteur à l'essieu moteur, la demanderesse a constaté que plus le nombre d'incisions du type de celles décrites dans le brevet EP 768958 était grand et plus le bruit enregistré au passage du véhicule devenait perceptible. Il existe en fait des directions dans lesquelles il n'y a pas de blocage entre les parois.

Le besoin existe d'une sculpture de bande de roulement pour pneumatique formée essentiellement de nervures circonférentielles pourvues d'une pluralité d'incisions, de largeur moyenne inférieure à 2 mm, créant un grand nombre d'arêtes et une grande longueur d'arêtes, ces incisions délimitant une pluralité d'éléments de gomme dont les parois en vis-à-vis se bloquent mutuellement l'une l'autre avec une efficacité quasiment instantanée (c'est-à-dire avec un retard très sensiblement réduit voire nul).

A cet effet, l'invention propose une bande de roulement pour pneumatique comportant une sculpture formée par au moins deux rainures d'orientation générale circonférentielle, ces rainures délimitant au moins deux nervures comportant chacune une face de contact destinée à venir en contact avec la chaussée et deux faces latérales, ces faces latérales coupant la face de contact pour former des arêtes, au moins une de ces nervures, de largeur moyenne L, comportant une pluralité d'incisions débouchant sur la face de contact et sur les deux faces latérales de la nervure, la trace de chaque incision, sur la surface de contact à l'état neuf, s'étendant entre deux points d'intersection A et B avec les arêtes de la nervure, la direction du segment AB faisant un angle $\alpha$ avec la direction transversale de la bande au plus égal à 40°, la bande étant caractérisée en ce que :

➢ chaque incision de largeur moyenne E, comprend, d'une face latérale de la nervure à l'autre face latérale, une succession de parties d'incision, certaines desdites parties d'incision ayant, sur au moins une hauteur totale He égale à la moitié de la profondeur maximale Hi de l'incision et pour toute surface parallèle à la surface de contact à l'état neuf prise à l'intérieur de cette hauteur He, des traces faisant un angle moyen $\beta$ au plus égal à 15° avec la direction longitudinale de la bande, lesdites parties ayant, en projection sur cette direction longitudinale, une longueur totale Lt qui est au moins égale au cinquième de la largeur L de la nervure; et en ce que,

➢ les parties d'incision dont les traces font un angle moyen β sont pourvues sur leurs parois en vis-à-vis des motifs de relief d'amplitude K destinés à coopérer, lors du passage dans le contact avec la chaussée, pour bloquer les mouvements relatifs d'une paroi de l'incision par rapport à la paroi opposée dans la direction de l'épaisseur de la bande et dans la direction longitudinale de la bande, l'amplitude K desdits motifs de relief étant comprise entre 4 et 10 fois la largeur moyenne E de l'incision.

La longueur totale Lt est égale à la somme des longueurs des projections sur la direction longitudinale Y des parties de l'incision faisant un angle moyen au plus égal à 15° avec la direction longitudinale Y. Cette longueur Lt peut être différente d'un plan de coupe à un autre plan de coupe, ce qui équivaut au fait que d'un plan de coupe à un autre la trace de l'incision sur la surface de roulement évolue.

La largeur moyenne E d'une incision est définie comme la distance moyenne séparant les parois en vis-à-vis.

Pour obtenir le résultat recherché, il est essentiel d'avoir la combinaison d'une longueur suffisante de parties d'incision faisant un angle faible avec la direction longitudinale de la bande (correspondant à la direction circonférentielle lorsque cette bande équipe un pneumatique) et la présence de motifs de relief sur ces parties pour réaliser un blocage des parois desdites parties dans toutes les directions contenues sur la surface desdites parties et cela sur au moins une hauteur totale He égale au moins aux deux tiers de la profondeur maximale Hi de l'incision. Bien sûr, cette hauteur He peut être prise comme la somme des hauteurs de plusieurs parties disjointes sur lesquelles sont vérifiées les conditions de l'invention énoncées plus haut, à savoir les conditions d'angle et de longueur.

Ainsi lors du passage dans le contact avec le sol, les nervures pourvues d'incisions selon l'invention peuvent être assimilées à des nervures continues mécaniquement (c'est-à-dire sans incisions), les parois en vis-à-vis des incisions étant au moins localement bloquées l'une contre l'autre pour annuler tout mouvement relatif dans des directions parallèles auxdites parois (c'est-à-dire autres que perpendiculaires à ces parois).

Préférentiellement :

- la longueur totale Lt est au moins égale au tiers de la largeur L de la nervure ;

- chaque partie d'incision faisant un angle moyen β au plus égal à 15° a, en projection sur la direction longitudinale de la bande, une longueur comprise entre le quart et la moitié du pas moyen entre deux incisions ;

- pour améliorer encore le blocage, chaque partie d'incision faisant un angle moyen β au plus égal à 15° a, en projection sur la direction longitudinale de la bande, une longueur au moins égale au cinquième de la largeur de la nervure ;

- les parois des incisions faisant un angle moyen β au plus égal à 15° sont pourvues de reliefs sur au moins 50% de la profondeur maximale de l'incision à partir de la surface de roulement à l'état neuf ; avantageusement, ces reliefs (creux ou bosses) sont réparties sur au moins trois lignes de niveau sensiblement parallèles à la surface de roulement ;

- l'angle moyen β est au plus égal à 5° pour réaliser un blocage encore plus efficace des mouvements dans la direction longitudinale des parois des incisions ;

- toutes les parties d'incision sont pourvues de reliefs sur leurs parois, ces reliefs étant destinés à coopérer entre eux pour bloquer tous les mouvements selon des directions parallèles auxdites parois.

La bande de roulement selon l'invention permet d'atteindre un fonctionnement quasiment identique à celui d'une même bande pourvue d'une sculpture formée de nervures tout en ayant un nombre d'arêtes et une longueur totale d'arêtes dans le contact qui confèrent à cette bande une performance très supérieure en adhérence. En effet, tous les mouvements relatifs, à l'exception de l'écartement, d'une paroi par rapport à la paroi en vis-à-vis sont très nettement réduits voire même annulés qu'une nervure pourvue de telles incisions soit soumise dans la zone de contact à des efforts tangentiels longitudinaux (circonférentiels) ou transversaux ou bien une combinaison desdits efforts.

Par ailleurs, il a été constaté qu'une sculpture selon l'invention n'était pas pénalisée en usure et en particulier qu'il ne se produisait pas d'usure irrégulière (c'est-à-dire que l'usure observée était sensiblement uniforme sur toute la surface de contact des nervures).

Les motifs de reliefs (saillies et cavités) peuvent avoir des formes géométriques quelconques, toutefois, il est préférable que ces formes soient semblables de manière à permettre une coopération plus efficace encore. Il est bien sûr possible de former uniquement des saillies sur une paroi délimitant une incision et de former uniquement des cavités complémentaires des saillies sur la paroi opposée.

Pour atteindre un blocage encore amélioré, il est avantageux de répartir sur toute la largeur des nervures la présence de parties d'incision faisant des angles moyens β au plus égal à 15°. Pour ce faire, et si on note :

- Le : la distance maximale séparant les parties d'incision comprenant des motifs de relief et situées au plus près des faces latérales de chaque nervure et,

- Li : la distance maximale séparant les parties d'incision comprenant des motifs de relief et situées les plus près de la partie médiane de chaque nervure,

il est avantageux que ces distances satisfassent les relations suivantes :

$$\frac{1}{3} \le \frac{Le}{L} \le \frac{2}{3}$$

$$\frac{1}{4} \le \frac{Li}{L}$$

D'autres caractéristiques et avantages de l'invention ressortent de la description faite ci-après en référence aux dessins annexés qui montrent, à titre d'exemples non limitatifs, des formes de réalisation de l'objet de l'invention.

Sur ces dessins,

La figure 1 est, selon une première variante, une vue en plan d'une nervure d'une bande de roulement d'un pneumatique selon l'invention;

La figure 2 montre une vue en coupe selon la ligne II-II d'une incision de la nervure montrée à la figure 1 ;

La figure 3 montre sur une deuxième variante selon l'invention une vue en plan d'une nervure d'une bande de roulement ;

La figure 4 montre une vue en coupe selon la ligne IV-IV d'une partie de l'incision de la nervure montrée à la figure 3 ;

La figure 5 montre une vue en coupe selon la ligne V-V d'une partie de l'incision de la nervure montrée à la figure 3 ;

La figure 6 montre une vue générale d'un élément moulant une incision selon l'invention ;

La figure 7 montre une autre variante d'une incision selon l'invention.

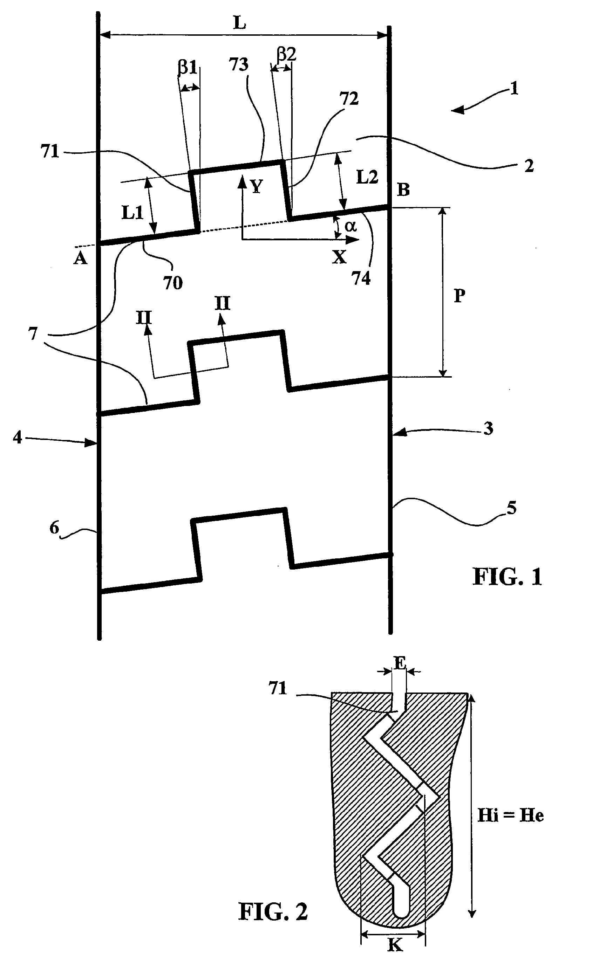

La figure 1 représente une vue partielle d'une nervure 1 d'une bande de roulement pour pneumatique de poids lourd de dimension 315/80 R 22.5 comprenant au total huit nervures délimitées par des rainures de profondeur moyenne égale à 15 mm et orientées dans la direction circonférentielle de cette bande (représentée par la direction Y sur la figure 1).

La nervure 1 comprend une face de contact 2 destinée à venir en contact avec le sol pendant le roulage et deux faces latérales 3 et 4 coupant la face de contact 2 selon deux arêtes 5 et 6. La nervure 1 est pourvue d'une pluralité d'incisions 7 débouchant sur chaque face latérale ; vue de la surface de roulement du pneumatique à l'état neuf, chaque incision 7 coupe ladite surface 2 suivant une trace s'étendant entre des points A et B situés sur les arêtes 5 et 6 de la nervure. L'angle moyen de la trace de l'incision sur la surface de roulement correspond à l'angle $\alpha$ que fait le segment AB avec la direction transversale de la bande (repérée par la direction X sur la figure); cet angle est ici égal à 7°. Chaque incision d'une même nervure a une largeur moyenne E de 0.6 mm et une profondeur quasiment constante sur toute sa longueur (entre les points A et B) et égale à la profondeur des rainures délimitant la nervure 1.

Chaque incision 7 s'étend entre la face latérale 5 et l'autre face latérale 6 de la nervure 1 et est formée par une succession de parties d'incision planes 70, 71, 72, 73, 74 dont on aperçoit sur la figure 1 les intersections avec la surface de roulement.

Deux parties 71, 72 de l'incision 7 ont des traces sur la surface de roulement qui font avec la direction longitudinale de la bande (repérée par la direction Y sur la figure) des angles respectivement β1 et β2 qui sont dans le cas présenté égaux à 7°. Ces deux parties d'incision 71 et 72 ont des longueurs L1 et L2 égales toutes les deux à 5 mm; dont la somme Lt en projections de ces longueurs sur la direction longitudinale Y est ici égale au tiers de la largeur L de la nervure.

Ces deux parties d'incision 71 et 72 sont en outre pourvues sur les parois les délimitant avec une pluralité de motifs en creux et en relief assez semblables à ceux décrits dans le brevet US5 783 002. Sur la figure 2, montrant une coupe selon la ligne II-II de la figure 1, on distingue l'incision 71 de largeur moyenne E et de profondeur Hi. Chacune des parois de l'incision 71 présente des motifs en creux et en relief sur une amplitude maximale K qui est égale dans le cas présent à 3.3 mm. En outre, les parois de cette incision 71 comporte des motifs en creux et en relief sur une hauteur totale He qui dans le cas présent est égale à Hi. Lesdits motifs sont répartis sur plusieurs niveaux entre la surface de roulement et le fond de l'incision : en pratique, et vu dans le sens de la profondeur Hi de l'incision, on dispose préférentiellement au moins trois rangées de reliefs.

Dans l'exemple présenté, les parties d'incision 70, 73, 74 sont également planes et coupent la surface de roulement selon des tracés rectilignes faisant un même angle moyen $\alpha$ égal à 7°. En outre, ces parties comportent également une pluralité de motifs de relief semblables à ceux disposés sur les parties 71 et 72.

Dans l'exemple décrit, le sens de rotation est opposé à la direction Y sur la figure 1.

Globalement, l'incision 1 est perpendiculaire à la surface de roulement à l'état neuf, c'est-à-dire que chaque partie 70, 71, 72, 73, 74 est en moyenne perpendiculaire à ladite surface.

Comme variante, il est possible d'incliner chaque incision d'un angle au plus égal en valeur absolue à 15° (par rapport à la direction perpendiculaire à la surface de roulement) ; les incisions d'une même nervure pouvant être alternativement inclinées d'un angle positif et d'un angle négatif.

Dans le tableau I ci-après est présentée une comparaison de différentes sculptures pourvues de nervures (cas 1 à cas 4):

- sans incision (cas 1) ;

- avec incisions planes de tracé rectiligne sur la surface de roulement (cas 2) ;

- avec incisions planes munies d'une pluralité de motifs de relief tels que décrits dans le brevet US5 783 002 (cas 3) ;

- avec incisions selon l'invention (cas 4).

Dans ce dernier cas 4, le pneumatique comprend huit nervures chacune pourvue d'une pluralité d'incisions telles que montrées à la figure 1. Les incisions de la nervure à l'épaule se distinguent des incisions des autres nervures en ce que, la nervure épaule étant plus large, ces incisions sont pourvues d'une ondulation supplémentaire d'amplitude plus importante :

Pour comparer ces sculptures (tableau I), on calcule pour chacune d'entre elles une rigidité en cisaillement longitudinal (suivant la direction Y sur la figure 1) égale au rapport entre l'effort longitudinal exercé par le sol sur chaque sculpture et la déformation de cisaillement imposée à ladite sculpture . On calcule de plus un assouplissement qui est défini comme le rapport entre la rigidité en cisaillement longitudinal et le produit du module de cisaillement de la gomme par la surface de la sculpture en contact avec le sol.

On définit un taux d'entaillement de chaque sculpture comme le rapport entre la somme des surfaces des incisions sur une nervure à l'état neuf et la surface totale de ladite nervure.

Tableau I - valeurs calculées

|  | Rigidité cisaillement longitudinal daN/mm | Assouplissement % | Taux entaillement % |
|---|---|---|---|
| Cas 1 | 44.30 | 98.66 | 0 |
| Cas 2 | 24.64 | 56.58 | 3 |
| Cas 3 | 21.79 | 50.55 | 4 |
| Cas 4 | 26.59 | 62.57 | 5.33 |

On constate qu'avec la sculpture selon l'invention (cas 4), il est possible d'augmenter le taux d'entaillement et la longueur d'arêtes en augmentant la rigidité en cisaillement longitudinal, comparativement à ce que l'on obtient avec des sculptures avec incisions non conformes à l'invention, sans pour autant créer un trop grand assouplissement.

Des mesures ont en outre été réalisées sur pneumatiques pourvues des mêmes sculptures (cas 2, cas 3, cas 4) et pour une sculpture pourvue de nervures munies d'incisions rectilignes pontées (cas 5), c'est à dire dont les parois en vis-à-vis sont reliées par des ponts de gomme. Ces mesures sont rassemblées dans le tableau II ci-après.

Tableau II - mesures sur pneumatique

|  | Rigidité cisaillement longitudinal moyen par nervure en daN/% | Taux entaillement moyen par nervure en % |
|---|---|---|
| Cas 2 | 50 | 3 |
| Cas 3 | 55 | 3 |
| Cas 4 | 60 | 5.33 |
| Cas 5 | 55 | 2,9 |

On constate que la sculpture pourvue d'incisions selon l'invention (cas 4) conserve une plus grande rigidité (exprimée en daN par % de déformation) qu'une sculpture pourvue d'incisions munies de pontages, tout en offrant un entaillement plus grand quel que soit le niveau d'usure.

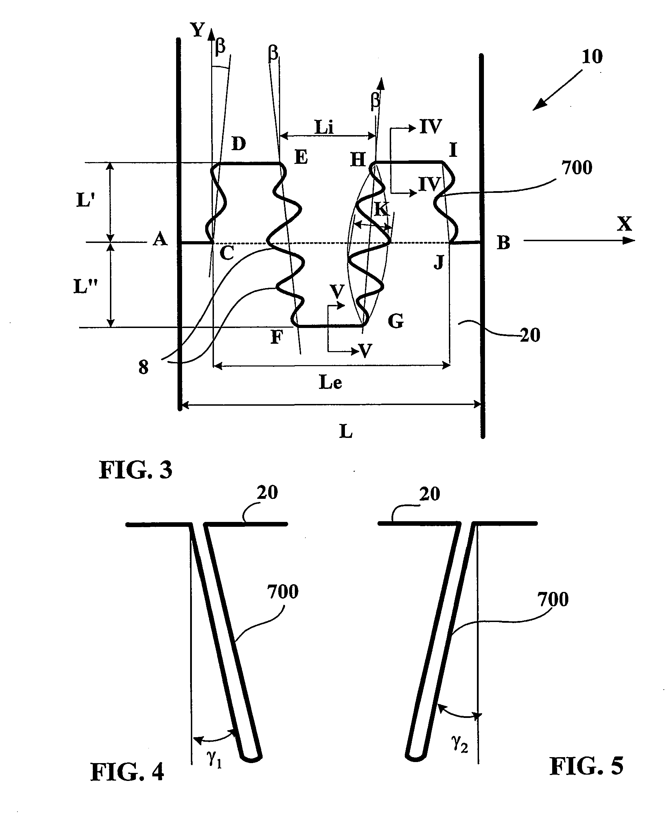

Sur la figure 3 est représentée une autre variante selon l'invention d'une nervure 10 d'une bande de roulement comportant une pluralité d'incisions 700. Chaque incision a, vue de la surface de roulement 20, une trace s'étendant entre deux points A et B d'intersection avec chacune des arêtes de la nervure. Cette incision comprend plusieurs parties successives d'incision en allant de A vers B à savoir : AC, CD, DE, EF, FG, GH, HI, IJ, JB. Les parties d'incisions AC, DE, FG, HI sont alignées avec la direction transversale X et ne comportent pas de motifs de reliefs sur les parois les délimitant.

Les parties CD, EF, GH, IJ font chacune un angle moyen $\beta$ égal en valeur absolue à 5° avec la direction longitudinale Y (l'angle étant celui du segment reliant les points d'extrémité de chacune desdites parties d'incision). Toutes ces parties d'incisions sont pourvues d'une pluralité de motifs de relief sur toute leur profondeur (comme le symbolise les traces ondulées 8 sur la surface de roulement telles que représentées sur la figure 3).

Pour améliorer encore le blocage des parois des parties d'incisions de plus grande longueur, l'amplitude maximale K des motifs de relief est située vers la région médiane de chacune desdites parties (dans l'exemple présenté, l'amplitude des motifs va en augmentant progressivement d'une extrémité vers la région médiane comme schématisé par les traits pointillés).

Il est avantageux que les parties d'incision inclinées d'un angle $\beta$ inférieur à 15° avec la direction longitudinale de la bande soient réparties sur la largeur de la nervure de manière à ce que le blocage des parois opposées de l'incision soit au mieux réparti sur toute la largeur de la nervure. Dans le cas présent, la largeur maximale Le, séparant les parties d'incision comprenant des motifs de relief et situées au plus près des faces latérales de chaque nervure (correspondant aux parties CD et IJ et plus particulièrement à la distance entre les points C et J), est égale aux 2/3 de la largeur L de la nervure 10, tandis que la largeur maximale Li, séparant les parties d'incision comprenant des motifs de relief et situées au plus près de la partie médiane de la nervure, est égale au tiers de la largeur L.

Avantageusement, les parties d'incision dépourvues de motifs de relief sont inclinées d'un angle positif et d'un angle négatif par rapport à un plan moyen perpendiculaire à la surface de roulement passant par le point A, l'inclinaison étant au plus égale à 15°.

Dans le cas présent, les parties d'incision DE et HI dépourvues de motifs de relief sont inclinées par rapport à une perpendiculaire à la surface de roulement de la bande à l'état neuf comme cela est visible à la figure 4. Sur cette figure 4, montrant une coupe selon la ligne IV-IV de la figure 3, la partie d'incision HI a une trace inclinée d'un angle $\gamma_1$ par rapport à une perpendiculaire à la surface de roulement passant par le point d'intersection de cette partie avec ladite surface. D'autre part, la partie d'incision FG située de l'autre côté du segment AB par rapport aux parties DE et HI, est inclinée d'un angle $\gamma_2$ de même valeur mais de signe opposé à l'angle $\gamma_1$ comme cela est visible sur la figure 5 montrant une coupe selon la ligne V-V de ladite partie d'incision FG.

Si on note L' et L" les distances des points de l'incision les plus éloignés dans la direction longitudinale de la ligne fictive passant par les points A et B et situés de par et d'autre de cette ligne, différents cas sont possibles. Dans l'exemple décrit, ces distances L' et L" sont sensiblement égales entre elles et égales au quart de la largeur L de la nervure.

Pour un meilleur équilibre en fonctionnement de la bande et un meilleur blocage des parois de l'incision, il est avantageux que les longueurs L' et L" soient pondérées par le nombre de parties d'incision quasiment orientées dans la direction longitudinale : dans le cas présent, il serait préférable d'avoir L" sensiblement égale au double de la longueur L'.

Les figures 1 et 3 montrent des nervures pourvues d'incisions selon l'invention conférant une orientation préférentielle auxdites nervures : bien entendu, le même effet peut être obtenu avec une sculpture selon laquelle il est réalisée une pluralité d'incisions sur chaque nervure, le tracé de chaque incision étant sensiblement symétrique par rapport à la ligne reliant les points d'intersection de ladite incision avec les arêtes de ladite nervure.

Les motifs de reliefs peuvent prendre la forme de rainures et de nervures destinées à coopérer les unes avec les autres pour assurer le blocage de tout mouvement dès que les parois des incisions pourvues de tels motifs sont en contact l'une sur l'autre. Les rainures et les nervures non nécessairement rectilignes sont formées sur les parois en vis-à-vis selon des directions moyennes qui peuvent être ou non perpendiculaires à la surface de roulement.

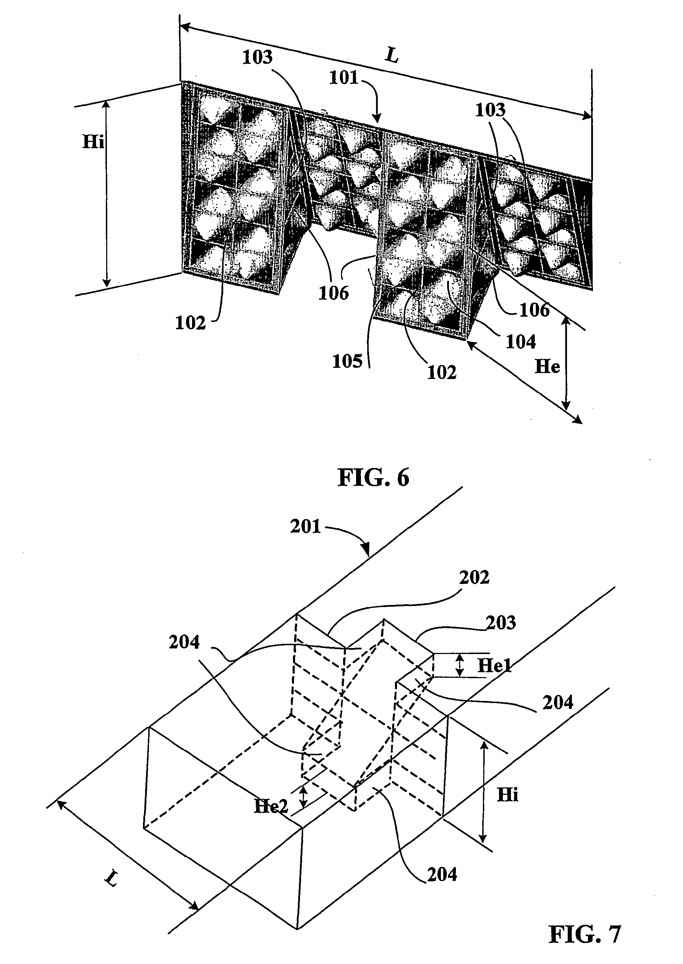

La figure 6 montre une variante d'élément moulant 101 sous forme d'une lamelle destinée à équiper un moule pour mouler une incision selon l'invention dans une bande de roulement. Cette lamelle 101 comprend deux parties obliques 102 (c'est-à-dire destinées à mouler des parties d'incisions formant un angle différent de zéro avec la direction perpendiculaire à la surface de roulement et des parties radiales 103 (destinées à mouler des parties d'incision perpendiculaires à la surface de roulement) intercalées. Toutes ces parties de lamelle ont une même épaisseur moyenne. La hauteur totale de la lamelle est notée Hi. Toutes les parties de lamelle comprennent des reliefs en creux 104 et en bosses 105 disposés de manière alternée dont l'amplitude est comprise entre 4 et 10 fois l'épaisseur moyenne de la lamelle.

Certaines des parties radiales 106 sont prévues pour mouler des parties d'incision formant un angle égal à 0° avec la direction longitudinale de la bande (les autres parties étant en l'espèce perpendiculaires à ladite direction).

La lamelle 101 décrite est conçue pour mouler une incision dont l'intersection sur la surface de roulement a une géométrie crénelée, l'amplitude du créneau augmentant progressivement avec la profondeur (dont avec l'usure de la bande). À partir d'une certaine profondeur et sur au moins une profondeur He restante au moins égale à la moitié de la hauteur totale Hi, les parties radiales 106, moulant des parties d'incision d'angle égal à 0° avec la direction longitudinale, ont en projection sur ladite direction une longueur totale Lt au moins égale au cinquième de la longueur L de la lamelle (par longueur totale on entend la somme des longueurs selon la direction longitudinale desdites parties radiales).

Une autre variante intéressante de cette dernière lamelle correspond à la représentation schématique de la figure 7. Sur cette figure 7, on a représenté un élément de gomme 201 d'une bande de roulement pourvu d'une incision 202 moulée avec une lamelle assez voisine de la lamelle précédemment décrite.

La particularité de l'incision 202, de profondeur totale Hi, est de former sur la surface de roulement un tracé géométrique 203 évoluant avec l'usure d'une forme crénelée, le créneau étant situé d'un premier côté par rapport au segment joignant les extrémités A et B de ladite incision, à une autre forme crénelée, le créneau étant situé sur le côté opposé par rapport au même segment, tout en passant par une position intermédiaire où le tracé géométrique est sensiblement rectiligne (à environ mi profondeur de l'incision dans le cas présenté). Les variations de forme du tracé géométrique commencent seulement à partir d'une profondeur Hel et se poursuivent de manière monotone jusqu'à une profondeur correspondant à un niveau situé à une distance He2 du fond de l'incision.

Au moins les parois en vis-à-vis des parties d'incision 204 alignées avec la direction longitudinale de l'élément de gomme comprennent des creux et bosses (non visibles sur la présente représentation) de manière que la somme des longueurs projetées sur la direction longitudinale desdites parties et sur la hauteur He égale à la somme des hauteurs He1 et He2 soit au moins égale au cinquième de la largeur L de l'élément de gomme 201. La hauteur He est ici égale à la moitié de la hauteur totale Hi de l'incision.

L'invention n'est pas limitée aux exemples décrits et représentés et diverses modifications peuvent y être apportées sans sortir de son cadre. En particulier, les pneumatiques pour véhicules de tourisme sont également concernés ainsi que les pneumatiques pour essieux non moteur des véhicules poids lourd.

**Revendications**

1. Bande de roulement pour pneumatique comportant une sculpture formée par au moins deux rainures d'orientation générale circonférentielle, ces rainures délimitant au moins deux nervures (1) comportant chacune une face de contact (2) destinée à venir en contact avec la chaussée et deux faces latérales, ces faces latérales coupant la face de contact pour former des arêtes (5, 6), au moins une de ces nervures, de largeur moyenne L, comportant une pluralité d'incisions (7) de profondeur maximale Hi et débouchant, à l'état neuf, sur la face de contact et sur les deux faces latérales de la nervure, la trace de chaque incision sur la surface de contact, s'étendant entre deux points d'intersection A et B avec les arêtes de la nervure, le segment AB faisant un angle $\alpha$ avec la direction transversale de la bande au plus égal à 40°, la bande étant **caractérisée en ce que** :

   ➢ chaque incision (7) de largeur moyenne E, comprend, d'une face latérale de la nervure à l'autre face latérale, une succession de parties d'incision (70, 71, 72, 73, 74), certaines desdites parties d'incision ayant, sur au moins une hauteur He égale à la moitié de la profondeur maximale Hi de l'incision et pour toute surface parallèle à la surface de contact à l'état neuf sur cette hauteur He, des traces faisant, avec la direction longitudinale de la bande, un angle moyen $\beta$ au plus égal à 15°, lesdites parties ayant, en projection sur cette direction longitudinale, une longueur totale Lt qui est au moins égale au cinquième de la largeur L de la nervure; et **en ce que**,
   ➢ les parties d'incision, dont les traces font un angle moyen $\beta$, sont pourvues, sur leurs parois en vis-à-vis de motifs de relief d'amplitude K destinés à coopérer entre eux, lors du passage dans le contact avec la chaussée, pour bloquer les mouvements relatifs d'une paroi de l'incision par rapport à la paroi en vis-à-vis dans la direction de l'épaisseur de la bande et dans la direction longitudinale de la bande, l'amplitude K desdits motifs de relief étant comprise entre 4 et 10 fois la largeur moyenne E de l'incision.

2. Bande de roulement pour pneumatique selon la revendication 1 **caractérisée en ce que** la longueur totale Lt, égale à la somme des projections sur la direction longitudinale Y des longueurs des parties de l'incision faisant un angle au plus égal à 15° avec la direction longitudinale Y, est au moins égale au tiers de la largeur L de la nervure.

3. Bande de roulement pour pneumatique selon la revendication 1 ou la revendication 2 **caractérisée en ce que** les parois délimitant les parties d'incision faisant, avec la direction circonférentielle, un angle β au plus égal à 15° comportent des motifs de relief à partir de la surface de roulement et sur une profondeur au moins égale à 50% de la profondeur maximale Hi de l'incision.

4. Bande de roulement pour pneumatique selon l'une des revendications 1 à 3 **caractérisée en ce que** l'angle moyen β est au plus égal à 5°.

5. Bande de roulement pour pneumatique selon l'une des revendications 1 à 4 **caractérisée en ce que** au moins une partie des incisions est inclinée par rapport à un plan perpendiculaire à la surface de roulement ledit plan passant par le point A d'un angle moyen différent de 0°.

6. Bande de roulement pour pneumatique selon la revendication 5 **caractérisée en ce que** les incisions sont toutes inclinées par rapport à un plan perpendiculaire à la surface de roulement et passant par le point A d'un même angle moyen au plus égal en valeur absolue à 15°, lesdites incisions étant alternativement inclinées d'un angle positif et d'un angle négatif.

7. Bande de roulement pour pneumatique selon l'une des revendications 1 à 4 **caractérisée en ce qu'**il y a au moins deux parties d'incision d'inclinaison moyenne inférieure à 15°, lesdites parties présentant des inclinaisons opposées.

8. Bande de roulement pour pneumatique selon l'une quelconque des revendications 1 à 7 **caractérisée en ce que**

$$\frac{1}{3} \le \frac{Le}{L} \le \frac{2}{3}$$

$$\frac{1}{4} \le \frac{Li}{L}$$

avec :

- **Le** : la distance maximale séparant les parties d'incision comprenant des motifs de relief et situées au plus près des faces latérales de chaque nervure et,
- **Li** : la distance maximale séparant les parties d'incision comprenant des motifs de relief et situées les plus près de la partie médiane de chaque nervure.

**Claims**

1. Tread for a tyre, comprising a tread pattern formed by at least two grooves of circumferential general orientation, these grooves delimiting at least two ribs (1) each comprising a contact face (2) intended to come in contact with the road and two lateral faces, the said lateral faces intersecting the contact face to form edges (5, 6), at least one of the said ribs, of mean width L, having a plurality of incisions (7) with maximum depth Hi which, in the new condition, open onto the contact face and onto the two lateral faces of the rib, the trace of each incision on the contact surface extending between two points of intersection A and B with the edges of the rib, the segment AB making an angle α with the transverse direction of the tread at most equal to 40°, the tread being **characterised in that**:

   ➢ each incision (7), of mean width E, comprises, from one lateral face of the rib to its other lateral face, a succession of incision portions (70, 71, 72, 73, 74), some of the said incision portions, over at least a height He equal to half the maximum depth Hi of the incision and for any surface parallel to the contact surface in the new condition over this height He, having traces that make, with the longitudinal direction of the tread, an average angle β at most equal to 15°, the said portions, viewed in projection on this longitudinal direction, having a total length Lt which is at least equal to one-fifth of the width L of the rib; and **in that**

➢ the incision portions whose traces make an average angle β are provided on their opposite walls with relief elements of amplitude K designed to cooperate with one another, during passage through the road contact zone, to block the relative movements between one wall of the incision and the opposite wall in the direction of the thickness of the tread and in the longitudinal direction of the tread, the amplitude K of the said relief elements being between 4 and 10 times the mean width E of the incision.

2. Tread for a tyre according to Claim 1, **characterised in that** the total length Lt, equal to the sum of the projections on the longitudinal direction Y of the lengths of the incision portions that make an angle at most equal to 15° with the longitudinal direction Y, is at least equal to one-third of the width L of the rib.

3. Tread for a tyre according to Claims 1 or 2, **characterised in that** the walls delimiting the incision portions that make an angle β at most equal to 15° with the circumferential direction, comprise relief elements from the rolling surface down to a depth at least equal to 50% of the maximum depth Hi of the incision.

4. Tread for a tyre according to any of Claims 1 to 3, **characterised in that** the average angle β is at most equal to 5°.

5. Tread for a tyre according to any of Claims 1 to 4, **characterised in that** at least one portion of the incisions is inclined relative to a plane perpendicular to the rolling surface, the said plane passing through the point A, by an average angle different from 0°.

6. Tread for a tyre according to Claim 5, **characterised in that** the incisions are all inclined relative to a plane perpendicular to the rolling surface and passing through the point A, by a same average angle whose absolute value is at most equal to 15°, the said incisions being inclined in alternation at a positive and at a negative angle.

7. Tread for a tyre according to any of Claims 1 to 4, **characterised in that** there are at least two incision portions with average inclination smaller than 15°, the said portions having opposite inclinations.

8. Tread for a tyre according to any of Claims 1 to 7, **characterised in that**:

$$1/3 \leq Le/L \leq 2/3$$

$$1/4 \leq Li/L$$

where:

- Le denotes the maximum distance separating the incision portions which comprise relief elements and are located closest to the lateral faces of each rib, and
- Li denotes the maximum distance separating the incision portions which comprise relief elements and are located closest to the median part of each rib.

**Patentansprüche**

1. Laufstreifen für Luftreifen, der ein Profil aufweist, das aus mindestens zwei Rillen von allgemein umlaufender Orientierung gebildet ist, wobei die Rillen mindestens zwei Rippen (1) begrenzen, die jeweils eine Kontaktfläche (2), die mit der Fahrbahn in Kontakt kommen soll, und zwei Seitenflächen aufweisen, die Seitenflächen die Kontaktfläche unter Bildung von Kanten (5, 6) schneiden, mindestens eine Rippe der mittleren Breite L eine Vielzahl von Einschnitten (7) aufweist, die eine maximale Tiefe Hi besitzen und im Neuzustand an der Kontaktfläche und den beiden Seitenflächen der Rippe münden, sich der Verlauf jedes Einschnittes an der Kontaktfläche zwischen zwei Schnittpunkten A und B mit den Kanten der Rippe erstreckt, die Linie AB mit der Querrichtung des Laufstreifens einen Winkel α von höchstens 40° bildet und der Laufstreifen **dadurch gekennzeichnet ist, dass**:

➢ jeder Einschnitt (7) einer mittleren Breite E von einer Seitenfläche der Rippe zur anderen Seitenfläche eine Folge von Einschnittbereichen (70, 71, 72, 73, 74) aufweist, wobei einige dieser Einschnittbereiche über mindestens eine Höhe He gleich der halben maximalen Tiefe Hi des Einschnitts und für alle Flächen parallel zur Kontaktfläche im Neuzustand über diese Höhe He Verläufe aufweisen, die mit der Längsrichtung des Laufstreifens einen mittleren Winkel β von höchstens 15° bilden, wobei diese Bereiche als Projektion auf die Längsrichtung eine Gesamtlänge Lt aufweisen, die mindestens einem Fünftel der Breite L der Rippe entspricht; und **dadurch**, dass

➢ die Einschnittbereiche, deren Verläufe einen mittleren Winkel β bilden, an ihren gegenüberliegenden Wänden mit Reliefelementen einer Amplitude K versehen sind, die, wenn sie in Kontakt mit der Fahrbahn kommen, zusammenwirken, um die relativen Bewegungen einer Wand des Einschnitts in Bezug auf die gegenüberliegende Wand in Richtung der Dicke des Laufstreifens und in der Längsrichtung des Laufstreifens zu blockieren, wobei die Amplitude K der Reliefelemente im Bereich des 4- bis 10-fachen der mittleren Breite E des Einschnitts liegt.

2. Laufstreifen für Luftreifen nach Anspruch 1, **dadurch gekennzeichnet, dass** die Gesamtlänge Lt, die der Summe der Projektionen der Längen der Einschnittbereiche, die einem Winkel von höchstens 15° mit der Längsrichtung Y bilden, auf die Längsrichtung Y entspricht, mindestens ein Drittel der Breite L der Rippe beträgt.

3. Laufstreifen für Luftreifen nach Anspruch 1 oder Anspruch 2, **dadurch gekennzeichnet, dass** die Wände, die die Einschnittbereiche begrenzen, die mit der Umfangsrichtung einen Winkel β von höchstens 15° bilden, Reliefelemente ab der Lauffläche und über eine Tiefe von mindestens 50 % der maximalen Tiefe Hi des Einschnitts aufweisen.

4. Laufstreifen für Luftreifen nach einem der Ansprüche 1 bis 3, **dadurch gekennzeichnet, dass** der mittlere Winkel β höchstens 5° beträgt.

5. Laufstreifen für Luftreifen nach einem der Ansprüche 1 bis 4, **dadurch gekennzeichnet, dass** mindestens ein Teil der Einschnitte in Bezug auf eine Ebene senkrecht zur Lauffläche geneigt ist, wobei diese Fläche durch den Punkt A in einem von 0° verschiedenen mittleren Winkel hindurchgeht.

6. Laufstreifen für Luftreifen nach Anspruch 5, **dadurch gekennzeichnet, dass** die Einschnitte in Bezug auf eine Ebene senkrecht zur Lauffläche, die durch den Punkt A hindurchgeht, in einem mittleren Winkel von höchstens einem Absolutwert von 15° geneigt sind, wobei die Einschnitte abwechselnd in einem positiven Winkel oder in einem negativen Winkel geneigt sind.

7. Laufstreifen für Luftreifen nach einem der Ansprüche 1 bis 4, **dadurch gekennzeichnet, dass** es mindestens zwei Einschnittbereiche mit einer mittleren Neigung unter 15° gibt, wobei die Bereiche entgegengesetzte Neigungen aufweisen.

8. Laufstreifen für Luftreifen nach einem der Ansprüche 1 bis 7, **dadurch gekennzeichnet, dass**

$$1/3 \leq Le/L \leq 2/3$$

$$1/4 \leq Li/L$$

mit:

- Le: maximaler Abstand, der die Einschnittbereiche trennt, die Reliefeinheiten aufweisen und am nächsten an den Seitenflächen jeder Rippe gelegen sind, und
- Li: maximaler Abstand, der die Einschnittbereiche trennt, die Reliefeinheiten aufweisen und am nächsten am Mittelbereich jeder Rippe gelegen sind.

**FIG. 1**

**FIG. 2**

**FIG. 3**

**FIG. 4**

**FIG. 5**

**FIG. 6**

**FIG. 7**